# EUROPEAN PATENT SPECIFICATION

(11) **EP 0 884 153 B1**
(45) Date of publication and mention of the grant of the patent: **12.09.2001**
(21) Application number: 97109364.6
(22) Date of filing: 10.06.1997
(51) Int. Cl.: B29C 31/08, B29C 70/30, B29C 70/54

(54) **A method for use in the production of a fiber reinforced three-dimensional product**
Verfahren zur Herstellung eines faserverstärkten dreidimensionalen Gegenstandes
Procédé pour la fabrication d'un objet tridimensionnel renforcé par des fibres

(43) Date of publication of application: 16.12.1998
(73) Proprietor: TREVIRA GMBH, 60528 Frankfurt am Main (DE)
(72) Inventor: Bak, Henning, 8600 Silkeborg (DK); Vestergaard, Torben, 8981 Spentrup (DK)
(74) Representative: Luderschmidt, Schüler & Partner GbR

(56) References cited:
- EP-A- 0 203 803
- EP-A- 0 678 610
- WO-A-95/35200
- GB-A- 2 268 699
- US-A- 4 404 156
- DATABASE WPI Week 8918 Derwent Publications Ltd., London, GB; AN 89-134891 XP002042795 & JP 01 080 520 A (KURARAY CO.) , 27 March 1989

## Description

The present invention relates to a method for producing a fiber reinforced three-dimensional product of a plastic material by using a mould in which the product is formed. Said plane laminate comprises reinforcing fibers and plastic matrix material.

Methods of the type mentioned in the introduction are known. During application of a three-dimensional shape, the formed plane laminate is not fixed in the mould in which it is deposited. If short or cut fibers are used for reinforcement of the plastic material, the material will normally not be fixed. Owing to this, it is not possible to control the orientation and distribution of the fibers when the product is given a three-dimensional shape. Thus, the finished and three-dimensional product will not always have well-defined material properties throughout its extent.

Methods are also known wherein the plane laminate is fixed partially in all directions so that a displacement of the deposited material is possible when it is given a three-dimensional shape.

Such potential for displacement in the material means that the orientation of the reinforcement fibers in the end product does not correspond to the orientation that the reinforcement fibers are given in the deposited plane laminate before a three-dimensional shape is applied to it. Thus, in the three-dimensional end product there will be larger distance between individual reinforcement fibers when an object is given a three-dimensional shape that is different from a plane deposit. Thus, at the same thickness of material throughout the surface of the object, the percentage content of reinforcement fibers will fall and become less the larger the distance from a plane original laminate. As a result of this lower content of reinforcement fibers, there will appear falling strength in such parts of the finished product.

It is noted that the production of a three-dimensional product may take place by depositing a number of layers on a three-dimensional shape, such as described e.g. in US-A-4,404,156 and US-A-5,312,579. However, a method for a mass production industry would preferably use the method where a plane laminate is formed initially which is subsequently given its three-dimensional shape by pressing/deep pressing the previously formed laminate.

WO 95/35200 discloses a method for producing a fiber reinforced three-dimensional product comprising despositing of long fibers in a mould consisting of a frame in which a carrier net for the fibers is suspended. The individual layers of a formed plane laminate are positioned in such a manner that only a first end is secured at a frame side. Said first ends are secured at different frame sides. By this method it is possible, in a pressing procedure giving the product its three-dimensional shape, to obtain a virtually even distribution of the fibers, even in areas which are subjected to the longest move away from the plane original laminate. Unfortunately this method allows only deposition of layers and reinforcement material uniform over the whole carrier net.

Therefore, a need exists for a method which allows manufacture of fiber reinforced three-dimensional shaped products having defined areas of higher reinforcement.

The present invention is primarily intended for this method, but the method may also be used in the production of plane products or substantially plane products in which it is possible to provide areas having a higher degree of reinforcing material. In this manner, the finished product may be given various mechanical properties such as different strengths in different orientations.

The GB 2 268 699 A describes an apparatus for use in the forming of a fibre reinforced plastics laminate comprising a layup table having a sheet of material defining a layup surface, wherein the sheet of material is resiliently deformable and supported by a series of spaced jacks, said spaced jacks being adjustable for height in a programmed sequence whilst the table supports the layup whereby to shape the layup in a predetermined manner to a required form.

The GB 2 268 699 A further discloses a method of forming a fibre reinforced plastics laminate including the steps of placing fibre reinforcing plies together with plastics matrix material onto a substantially flat surface to form a layup, applying heat to the layup and deforming the surface whereby to thermoform the layup to a desired shape.

In order to form the fibre reinforced plastics laminate the jacks are moved in a direction from the bottom in an upward direction. This method is suited for the production of aircraft wing skins i. e. bodies having a more or less pronounced curvature. This document does not disclose forming methods by which a body is formed by pressing devices as it is the case according to the present invention.

The instant invention relates to a method for producing of fiber reinforced three-dimensionally shaped products comprising the steps:
a) deposition of matrix and reinforcing material to form a laminate on a carrier net which has been fixed in a frame by securing components,
b) heating the laminate of step a),
c) pressing the heated laminate of step b) into the desired three-dimensional shape,
d) releasing the three-dimensionally shaped article of step c),
e) removing the three-dimensionally shaped article of step d) from the mould, characterized in that,
f) the laminate according to step a) comprises defined areas of higher reinforcement which correspond to defined areas of higher strength in the three-dimensionally shaped article and
g) the frame according to step a) being a positioning frame which allows to locate the laminate in one proper position in the mould.

An apparatus for use by the method comprises a frame which has a marker component and therefore allows positioning of the frame in the mould. Such a marker component can be mechanical, physical, electrical or optical. Such an apparatus is also covered by the invention and will be described hereinafter.

In step a) of the instant invention the laminate can be formed by deposition of individual layers on a carrier net. These carrier nets being described in WO 95/35200. The carrier net can be made of any suitable material including hybrid yarn comprising thermoplastic polymer material, such as polyester or polyolefin, which allows further processing.

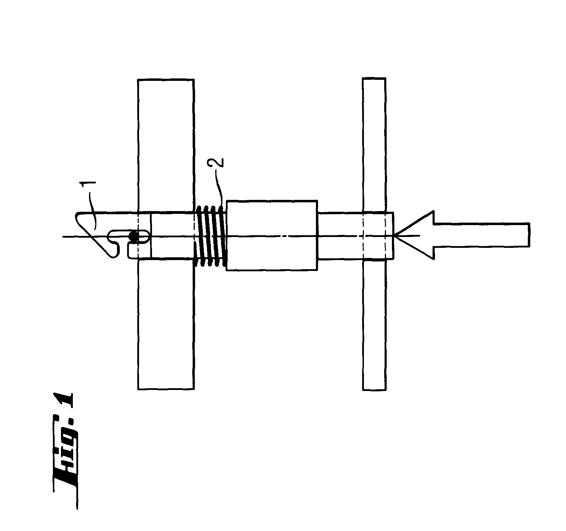

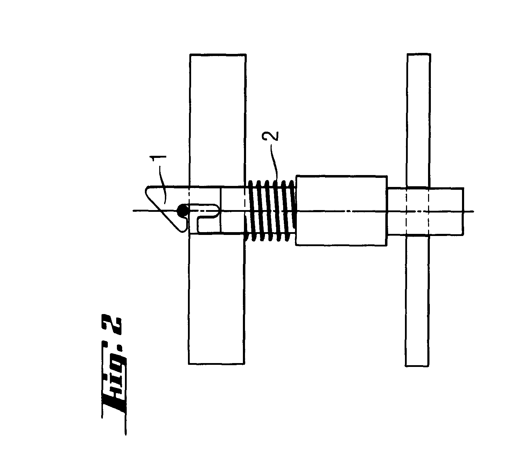

The carrier net being fixed in the frame by securing components such as described in WO 95/35200. Further to WO 95/35200 the securing components being construced as a spring needle. Such spring needle have the advantage that they can be easily used in mass production of the above three-dimensionally shaped articles. This construction allows automatical release of the carrier net by a spring force. It is prefered that the securring components being contructed in form of a spring needle wherein said needle has the form of a hook as shown in Figure 1 and 2.

The laminate being formed comprise at least matrix material and/or reinforcing material. Said material can be arranged in form of individual layers.

The matrix material can be any thermoplastic polymer or hardening plastic. Suitable matrix materials being described in WO 95/35200, DE-A-19625800, DE-A-19625798, DE-A-19625785, DE-A-19625797 and DE-A-19625786 which are incorporated by reference. The matrix material can in form of a textile fabric, i.e. a woven, nonwoven or knitted textil fabric material. Suitable examples in which form the matrix material can be employed being described in WO 95/35200, DE-A-19625800, DE-A-19625798, DE-A-19625785, DE-A-19625797 and DE-A-19625786 which are incorporated by reference.

The reinforcing material preferably is in fiber form or in form of a textile material comprising said fibers. The reinforcing material can be any organic material or inorganic material or mixtures thereof. Examples for suitable organic and inorganic materials being described in WO 95/35200, DE-A-19625800, DE-A-19625798, DE-A-19625785, DE-A-19625797 and DE-A-19625786 which are incorporated by reference. Prefered reinforcing materials being glass fiber, carbon fiber, aramide fiber, metal fiber or mixtures thereof with thermoplastic polymer, so called hybrid yarn.

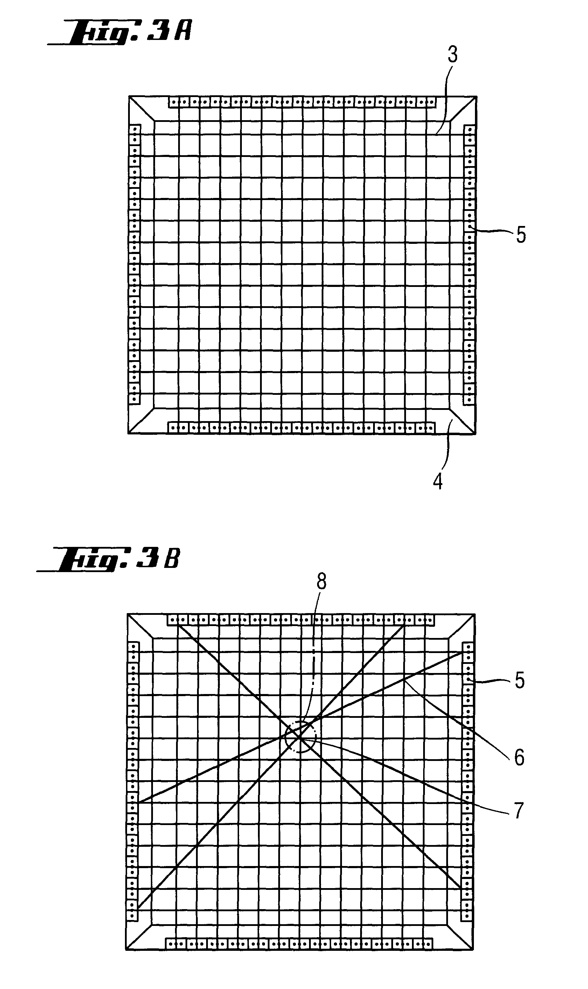

The degree and position of reinforcement can be controlled by different manner. It is possible to use fiber, yarn or stripes to build up crossing points of reinforcing material in order to have a higher degree of reinforcement. This technique is illustrated by Figure 3B, 3C and 3D. Figures 3B and 3C show reinforcing yarns which form crossing points. Such crossing points have a higher degree of reinforcement. The fiber, yarn and stripes being fixed at the securing components of the frame. Another possibility to controll reinforcement is deposition of reinforcing textile material as shown in Figure 3E and 3F. Such reinforcing layer can be fixed on the carrier net (Figure 3A) or previous layer by welding, needling and any other suitable method which will fixe the material. It is also prefered to fix the reinforcing layer with a yarn or fiber to form a sandwich-structure or stacked laminate as shown in Figure 3E.

The essential of the invention is that the degree and position of reinforcement in the plane laminate correspond to a specific position of the three-dimensionally shaped article. This can be controlled by deposition of the individual layers on the carrier net fixed in a frame which has a marker component. Said marker component of the frame allows only a specific position of said frame in the mould.

Another aspect of the invention is that by the method described herein it is possible to create regions with different morphology. This means that the appearance or design of the finished article can be controlled, i.e. by colored fibers etc. It is further possible to add so called primer material to the laminate material to achieve better adhesion of the following layers. It is also possible to incorporate other materials having different physical and/or chemical behaviors in order to improve the three-dimensionally shaped article or simply to change the look of the three-dimensionally shaped article.

The arrangement of the laminate is secured in the mould by means of the securing components of the pressing frame and the mould for example as described in WO 95/35200.

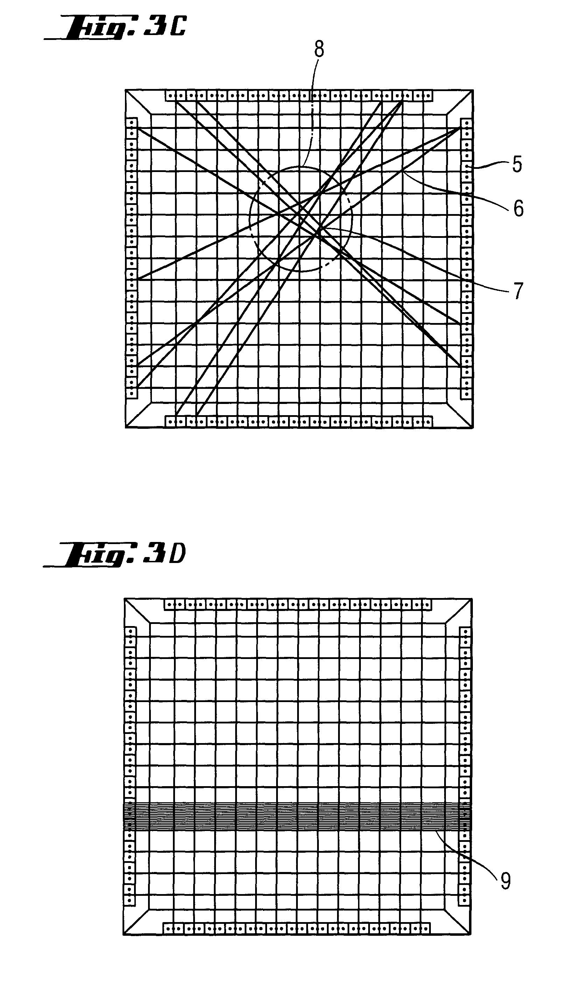

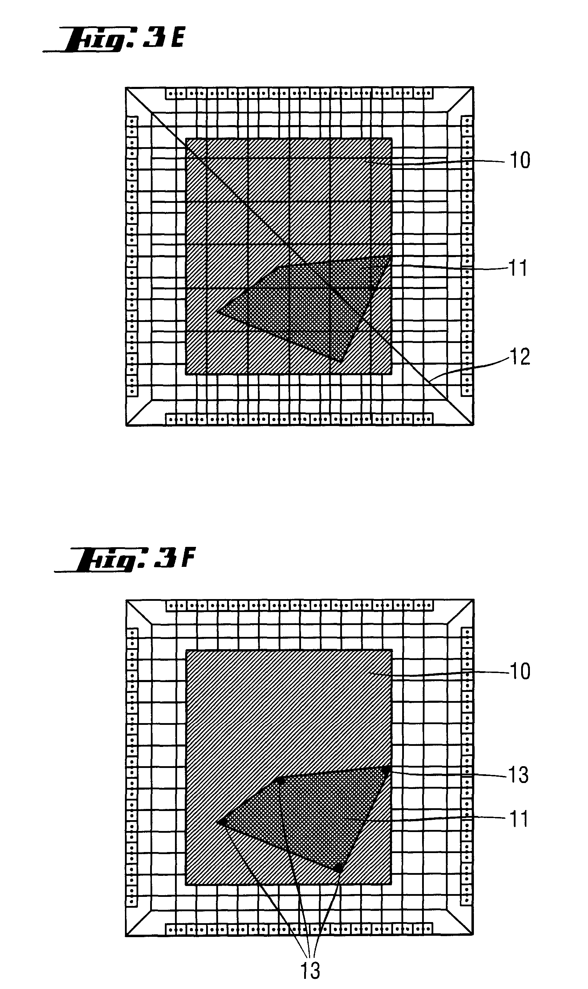

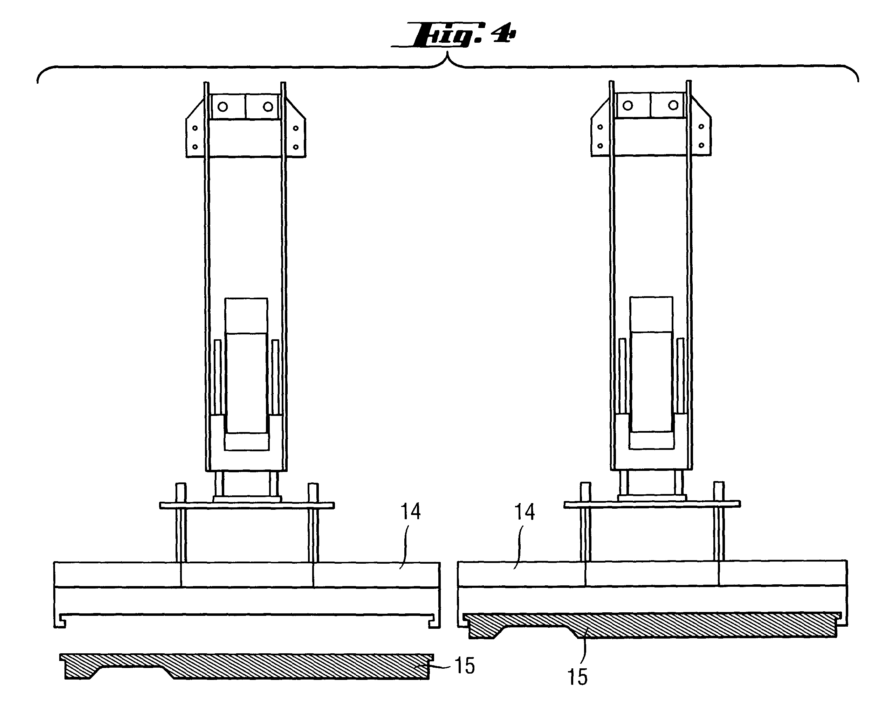

Afterwards, according to step b) of the claimed method, the laminate is heated to the processing temperature that applies to the chosen matrix material. The heating will initiate a chemical reaction in the matrix material if a hardening plastic is used. When using thermoplastic matrix materials, the laminate is kept at the processing temperature of the chosen matrix material until the consolidation during the pressing has been completed. The heating can be carried out stepwise or in different heaters, i.e. by contact heater in order to prevent thermal shrinkage of the material. In case that the laminate has not an uniform thickness it is prefered to use a contact heater having a contour heating plate which will reflect said non-uniform thickness of the laminate to be heated. Such a contact heater having contour heating plates is illustrated in Figure 4. It is further prefered to heat only the carrier net and the laminate for economical reasons. It is also possible to heat the carrier net and laminate together with the frame.

It is prefered that the laminate is heated by contact heating between two heated surfaces to a temperature immediately below the sticking temperature of the plastic as described in WO 95/35200. However, the temperature is as high as possible without the material sticking to the heating surfaces used herein.

After this heating the carrier net with the laminate deposited thereon is carried to a further process step in which the laminate is heated to the process temperature, preferably in a hot-air oven. Alternatively the heating to the process temperature may take place by means of other heat sources, such as radiated heat, ultrasonic sound and/or high-frequency heater.

The laminate thus heated is then carried to a process step as shown in figures 6, 7 and 8 of WO95/35200. In this step the carrier frame with the deposited laminate is introduced between a pressing frame, comprising a positive mould part, and a lower mould, comprising a negative mould part. Positioning of the frame will be effected by the marker components of the frame. The carrier net is transported from the preceding process step and through a succeeding process step by means of transport equipment supporting the frame. The transport equipment is comprised of rails placed at such mutual distance that the formed laminate is located in the middle of the carrier net at a distance from the frame sides resting on the transport equipment. Thus, there is room for the heating members in the shape of the heating surfaces and the hot-air oven to encircle the whole laminate without having to encircle the frame and the transport equipment.

After the laminate has been positioned between the pressing frame and the mould, the pressing frame is moved down towards the mould. This actuates the securing components in the shape of cooperating surfaces on the pressing frame and a surface on the mould. This situation is illustrated in figure 7 of WO 95/35200. At the same time as the laminate is secured by the securing components, the carrier net is released from the frame.

The succeeding process step is seen in figure 8 of WO 95/35200 where the product is given its three-dimensional shape, as the pressing frame is displaced further down towards the mould so that the positive mould part is introduced into the negative mould part, the laminate placed between them obtaining simultaneously its three-dimensional shape. As the mould is closing, the laminate 18 is consolidated in its final shape. This takes place within very few seconds.

When a pressure is established (step c), the individual layers of the deposited laminate will enter into close contact with each other and since the matrix material will at the same time consolidate during the pressing, the product will be in its three-dimensional shape. During this shaping, the reinforcing fibers, yarns and/or stripes will be secured and consequently they will retain their orientation and position during and after the three-dimensional shaping. Even in the area that is given the largest distance away from the plane original laminate, the fibers will be evenly distributed throughout the product surface. As a result thereof, better and more well-defined mechanical properties may be obtained in the formed three-dimensional product.

Afterwards, the three-dimensionally shaped article will be released (step d) and removed from the mould (step e).

Hardening plastic or thermoplastic may be used in the process. Heating must be done to different temperatures and serves different purposes, which will be known by a person skilled in the art. When using hardening plastic there will often be a requirement for a heating for initiation of the chemical process of consolidation of the laminate. If thermoplastic is used, the heating is required for accomplishing the very chemical process of laminate consolidation.

The choice of temperature interval and consolidation times will depend on the chosen materials. As this will be known to someone skilled in the art, a more detailed description of this will not be given.

According to a particularly advantageous embodiment, the carrier net is formed from the same reinforcement fibers, which are mixed with the same matrix as used in the fiber arrangement. In this manner it is possible that the carrier net, which is released from the frame such as described above, forms part of the finished three-dimensional product without being visible in the finished web. It is also possible to use a carrier net of other types of reinforcement fibers. The carrier net is advantageously formed by means of supplies on rolls which are placed at one side and at one end of the carrier frame and which are displaced automatically across the carrier frame either according to a pattern, in order to form one continuous fiber in the same manner as a racket is stringed, or just in order to provide one or two adjacent fibers in the carrier net. It is not essential how the carrier net is formed on the frame. This may also take place manually. It is important, however, that the carrier frame is provided with the securing coponents or similar components which make it possible to secure and release the carrier net during the process.

In the method according to the invention the mould used will frequently be a polygonal, preferably quadrangular one. It is possible, however, to use moulds with any outer contours.

In case that the local reinforcement of the laminate will result in a laminate having different thickness it is possible to use a mould which will reflect the different thickness.

With the apparatus according to the invention the method will be suited for industrial use. The frame has a marker which allows positioning of the frame and the laminate in the mould and is provided with a suspended carrier net wherein each thread of the net preferably consists of reinforcement fibers, which may be mixed with the same matrix as has been used in the fiber arrangement. Alternatively, the net thread may be composed of pure reinforcement fibers or be mixed with an alien matrix which is different from the matrix used in the fiber arrangement. A simple structure is obtained wherein the deposited laminate may be conducted through different stations in which the method is exerted at the same time as the carrier net may enter as part of the finished product.

As the product is deposited on the carrier net and since the mould and the pressing frame, which has a smaller extent than the carrier frame, comprise the securing components, the handling equipment is simplified. Thus it is possible to use a surface of the mould which cooperates with a surface of the pressing frame which is simultaneously used for giving the product its three-dimensional shape. When upon heating the product is pressed and simultaneously secured as described above, the carrier net may be released from the carrier frame and enter into the finished product when the pressing frame presses down onto and holds the laminate on holding surfaces of a mould. When the carrier net is composed of reinforcement fibers corresponding to those used for the product, a particularly preferable application of the method is obtained.

The three-dimensionally shaped articles being useful in aviation and automobile industry.

### Description of the drawings

The invention will now be explained in further detail below with reference to the accompanying drawing.

Figure 1 show the prefered securing member in form of a spring needle wherein said needle is in the form of a hook (1). Mechanical force (see arrow) will overcome the spring force of the spring (2) and open/release the carrier net and fixed reinforcing material.

Figure 2 show the prefered securing member in form of a spring needle wherein said needle is in the form of a hook. Lack of mechanical force will close and lock the carrier net and reinforcing material due to the spring force provided by the spring..

Figure 3 A show a carrier net (3) being fixed in the frame (4) by securing components (5).

Figure 3 B further to Figure 3 A show reinforcing yarns (6) being fixed by securing components (5) forming crossing points (7). Said crossing points being the area (see circle) having a higher degree of reinforcement (8).

Figure 3 C as Figure 3 B show reinforcing yarns (6) being fixed by securing components (5) forming crossing points (7). Said crossing points being the area (se circle) having a higher degree of reinforcement (8).

Figure 3 D further to Figure 3 C show reinforcing stripes (9) being fixed by securing components.

Figure 3 E shows two textile layers (10) (light gray) and (11) (heavy gray) as reinforcing material. Said layers (10) and (11) fixed by a further yarn (12).

Figure 3 F show two textile layers (10) (light gray) and (11) (heavy gray) as reinforcing material. Said layers (10) and (11) being fixed overall or just in points (13), i.e. by adhering, needling and/or welding.

Figure 4 show a contact heater (14) with replaceable heating plates (15). The contour of the heating plate (15) corresponds to the non-uniform thickness of the laminate to be heated.

In the various figures of the drawings, identical or corresponding elements have been designated by the same reference numerals and will not be explained in detail in connection with each figure.

## Claims

1. A method for producing of fiber reinforced three-dimensionally shaped products comprising the steps:
a) deposition of matrix and reinforcing material to form a laminate on a carrier net (3) which has been fixed in a frame (4) by securing components (5),
b) heating the laminate of step a),
c) pressing the heated laminate of step b) into the desired three-dimensional shape,
d) releasing the three-dimensionally shaped article of step c),
e) removing the three-dimensionally shaped article of step d) from the mould, **characterized in that**,
f) the laminate according to step a) comprises defined areas of higher reinforcement which correspond to defined areas of higher strength in the three-dimensionally shaped article and
g) the frame according to step a) being a positioning frame which allows to locate the laminate in one proper position in the mould.

2. The method as claimed in claim 1, wherein the reinforcing fibers comprise glass fiber, carbon fiber and/or aramide fiber.

3. The method as claimed in claim 1, wherein the reinforcing fibers being hybrid yarn.

4. The method as claimed in claim 1, wherein the matrix material is a thermoplastic material.

5. The method as claimed in claim 1, wherein the matrix material is a hardening plastic.

6. The method as claimed in claim 1, wherein the areas of higher reinforcement being formed by crossing points (7) of reinforcing yarns (6).

7. The method as claimed in claim 1, wherein the areas of higher reinforcement being formed by reinforcing stripes(9).

8. The method as claimed in claim 1, wherein the areas of higher reinforcement being formed by reinforcing layers (10, 11),

9. The method as claimed in claim 1, wherein the carrier net comprises hybrid yarn.

10. The method as claimed in claim 1, wherein the positioning frame has a mechanical, physical, electrical or optical marker which allows positioning the frame and positioning the laminate in the mould.

11. The method as claimed in claim 1, wherein the carrier net is fixed by spring needles having a hook(1).

12. The method as claimed in claim 1, wherein the reinforcing material has been fixed in the laminate or on the carrier net, overall, in part or in points by needling, welding and/or adheasion.

13. The method as claimed in claim 1, wherein the reinforcing material is fixed by an additional net.

14. The method as claimed in claim 13, wherein the net comprise reinforcing material.

15. The method as claimed in claim 13, wherein the net comprises hybrid yam.

16. The method as claimed in claim 1, wherein the heating of the laminate is carried out in a contact heater (14) having contour heating plates (15) which correspond to the thickness of laminate .

## Patentansprüche

1. Verfahren zur Herstellung von faserverstärkten dreidimensional geformten Produkten, umfassend folgende Stufen:
a) Ablegen eines Matrix- und Verstärkungsmaterials unter Bildung eines Laminats auf einem Trägernetz (3), das in einem Rahmen (4) durch Befestigungskomponenten (5) befestigt wurde,
b) Erwärmen des Laminats der Stufe a),
c) Pressen des erwärmten Laminats der Stufe b) in die erwünschte dreidimensionale Gestalt,
d) Ablösen des dreidimensional geformten Gegenstands der Stufe c)
e) Entnehmen des dreidimensional geformten Gegenstands der Stufe d) aus der Form,
**dadurch gekennzeichnet, dass**
f) das Laminat gemäß Stufe a) definierte Bereiche einer höheren Verstärkung umfasst, welche definierten Bereichen höherer Festigkeit im dreidimensional geformten Gegenstand entsprechen, und
g) der Rahmen gemäß Stufe a) ein Positionierungsrahmen ist, welcher ermöglicht, das Laminat in eine richtige Lage in der Form zu bringen.

2. Verfahren gemäß Anspruch 1, bei dem die Verstärkungsfasem Glasfasern, Kohlenstofffasern und/oder Aramidfasern umfassen.

3. Verfahren gemäß Anspruch 1, bei dem die Verstärkungsfasem Hybridgarn sind.

4. Verfahren gemäß Anspruch 1, bei dem das Matrixmaterial ein thermoplastisches Material ist.

5. Verfahren gemäß Anspruch 1, bei dem das Matrixmaterial ein härtender Kunststoff ist.

6. Verfahren gemäß Anspruch 1, bei dem die Bereiche höherer Verstärkung durch Kreuzungspunkte (7) von Verstärkungsgarnen (6) gebildet sind.

7. Verfahren gemäß Anspruch 1, bei dem die Bereiche höherer Verstärkung durch Verstärkungsstreifen (9) gebildet sind.

8. Verfahren gemäß Anspruch 1, bei dem die Bereiche höherer Verstärkung durch Verstärkungsschichten (10,11) gebildet sind.

9. Verfahren gemäß Anspruch 1, bei dem das Trägernetz Hybridgarn umfasst.

10. Verfahren gemäß Anspruch 1, bei dem der Positionierungsrahmen eine mechanische, physikalische, elektrische oder optische Anzeigevorrichtung aufweist, welche ermöglicht, den Rahmen und das Laminat in der Form in die richtige Lage zu bringen.

11. Verfahren gemäß Anspruch 1, bei dem das Trägernetz durch Federnadeln mit einem Haken (1) befestigt wird.

12. Verfahren gemäß Anspruch 1, bei dem das Verstärkungsmaterial im Laminat oder auf dem Trägernetz insgesamt, teilweise oder in Punkten durch Nadeln, Schweißen und/oder Kleben befestigt ist.

13. Verfahren gemäß Anspruch 1, bei dem das Verstärkungsmaterial durch ein zusätzliches Netz befestigt ist.

14. Verfahren gemäß Anspruch 13, bei dem das Netz Verstärkungsmaterial umfasst.

15. Verfahren gemäß Anspruch 13, bei dem das Netz Hybridgarn umfasst.

16. Verfahren gemäß Anspruch 1, bei dem das Erwärmen des Laminats in einer Berührungsheizvorrichtung (14) durchgeführt wird, welche Profilheizplatten (15) aufweist, welche der Dicke des Laminats entsprechen.

## Revendications

1. Procédé pour produire des produits de forme tridimensionnelle renforcés de fibre comprenant les étapes consistant:
a) à déposer une matière de matrice et de renforcement pour former un stratifié sur un filet porteur (3) qui a été fixé dans un cadre (4) à l'aide de composants de fixation (5) ;
b) à chauffer le stratifié de l'étape a) ;
c) à presser le stratifié chauffé de l'étape b) dans la forme tridimensionnelle souhaitée;
d) à libérer l'article de forme tridimensionnelle de l'étape c);
e) à retirer l'article de forme tridimensionnelle de l'étape d) du moule;
**caractérisé en ce que**
f) le stratifié selon l'étape a) comprend des zones définies de renforcement supérieur qui correspondent à des zones définies de résistance supérieure dans . l'article de forme tridimensionnelle; et
g) le cadre selon l'étape a) étant un cadre de positionnement qui permet de situer le stratifié dans une position correcte dans le moule.

2. Procédé selon la revendication 1, dans lequel les, fibres de renforcement comprennent une fibre de verre, une fibre de carbone et/ou une fibre aramide.

3. Procédé selon la revendication 1, dans lequel les fibres de renforcement sont un fil hybride.

4. Procédé selon la revendication 1, dans lequel la matière de matrice est une matière thermoplastique.

5. Procédé selon la revendication 1, dans lequel la matière de matrice est une matière plastique durcissante.

6. Procédé selon la revendication 1, dans lequel les zones de renforcement supérieur sont formées par des points de croisement (7) de fils de renforcement (6).

7. Procédé selon la revendication 1, dans lequel les zones de renforcement supérieur sont formées par des bandes de renforcement (9).

8. Procédé selon la revendication 1, dans lequel les zones de renforcement supérieur sont formées par les couches de renforcement (10, 11).

9. Procédé selon la revendication 1, dans lequel le filet porteur comprend un fil hybride.

10. Procédé selon la revendication 1, dans lequel le cadre de positionnement possède un marqueur mécanique, physique, électrique ou optique qui permet le positionnement du cadre et le positionnement du stratifié dans le moule.

11. Procédé selon la revendication 1, dans lequel le filet porteur est fixé par des aiguilles à bec ayant un crochet (1) .

12. Procédé selon la revendication 1, dans lequel la matière de renforcement a été fixée dans le stratifié ou sur le filet porteur, en totalité, en partie ou par points à l'aide de piquage, soudure et/ou adhérence.

13. Procédé selon la revendication 1, dans lequel la matière de renforcement est fixée à l'aide d'un filet supplémentaire.

14. Procédé selon la revendication 13, dans lequel le filet comprend une matière de renforcement.

15. Procédé selon la revendication 13, dans lequel le filet comprend un fil hybride.

16. Procédé selon la revendication 1, dans lequel le chauffage du stratifié est réalisé dans un chauffage par contact (14) ayant des plaques chauffantes à Contour (15) qui correspondent à l'épaisseur du stratifié.
